# EUROPEAN PATENT SPECIFICATION

(11) **EP 3 942 203 B1**
(45) Date of publication and mention of the grant of the patent: **21.06.2023**
(21) Application number: 20716935.0
(22) Date of filing: 19.03.2020
(51) Int. Cl.: F16J 15/40, F04D 29/10, F04D 29/12

(54) **CONTROL APPARATUS AND METHOD FOR SUPPLYING PURGE GAS**
STEUERVORRICHTUNG UND VERFAHREN ZUM ZUFÜHREN VON SPÜLGAS
APPAREIL ET PROCÉDÉ DE COMMANDE D'ALIMENTATION EN GAZ DE PURGE

(30) Priority: 19.03.2019 GB 201903737
(43) Date of publication of application: 26.01.2022
(73) Proprietor: Edwards, S.R.O., 78349 Lutin (CZ)
(72) Inventor: BROOKS, Anthony, 783 49 Lutin (CZ)
(74) Representative: Arnold, Emily Anne
(86) International application number: PCT/IB2020/052535
(87) International publication number: WO 2020/188515

(56) References cited:
- EP-A1- 1 681 469
- EP-A1- 3 199 820
- WO-A1-2016/083196
- US-A- 5 746 435
- US-A1- 2013 136 634
- US-A1- 2017 363 209

## Description

### TECHNICAL FIELD

The present disclosure relates to a control apparatus and method for supplying purge gas. Aspects of the invention relate to a method of controlling the supply of a purge gas; a controller for controlling a supply of purge gas; and a dynamic sealing system for a vacuum system.

### BACKGROUND

It is known in a vacuum system to provide a dynamic seal for forming a seal with a rotor shaft of a vacuum pump. The dynamic seal maintains the seal to allow a vacuum to be established in a vacuum chamber in which production processes are performed. The dynamic seal may be in the form of a lip seal (also known as a radial shaft seal) for forming a seal with an outer surface of the rotor shaft. The dynamic seal retains process materials in the vacuum chamber. The dynamic seal has an inboard side which is in fluid communication with the vacuum chamber, and an outboard side which is isolated from the vacuum chamber. It is known to provide a regulated supply of purge gas to the outboard side of the dynamic seal.

The inventor of the present application has identified that, under certain operating conditions, a pressure differential may be established which promotes leakage past the dynamic seal. In the case of a vacuum system in which a vacuum chamber is sealed by the dynamic seal, these conditions may arise when the operating pressure inside the vacuum chamber is larger than the operating pressure on the other side of the dynamic seal. The resulting pressure differential is referred to herein as an adverse pressure differential and may promote leakage past the dynamic seal, potentially transferring process materials out of the vacuum chamber. The process materials may be transferred to a lubricant reservoir (for example an oil box) resulting in lubricant contamination. Continued operation of the vacuum pump with a contaminated lubricant may result in damage. This problem may be exacerbated if the dynamic seal is worn.

US2017/363209 discloses a rotary machine system with a compressor comprising a gas seal portion; and a gas seal module that supplies a seal gas to the gas seal portion. A seal gas supply path supplies a part of the gas compressed by the compressor as the seal gas from a discharge side of the compressor to a seal gas supply port.

EP 1681469 discloses a rotary dry vacuum pump driven by a canned motor. At the time when the vacuum pump is stopped, or before or after the vacuum pump is stopped, a purge gas of a flow rate controlled by a valve (a hand-operated valve, an electromagnetic valve or an orifice) may be poured into the interior of the canned motor to prevent the process gas from flowing into the bearing part and motor portion of the vacuum pump. The electromagnetic valve may be open to continue the supply of the purge gas for a previously measured time.

EP 3199820A1 and US 2017/363209 A1 disclose seal gas supply control methods and apparatus for a rotary machine in the form of a centrifugal compressor. A portion of a compressed fluid which is compressed by the centrifugal compressor is supplied to the seal gas supply port through a seal gas supply path as a seal gas.

It is an aim of the present invention to address one or more of the disadvantages associated with the prior art.

### SUMMARY OF THE INVENTION

Aspects and embodiments of the invention provide a method of controlling a supply of purge gas; a controller for controlling a supply of purge gas; and a dynamic sealing system for a vacuum system as claimed in the appended claims

According to an aspect of the present invention there is provided a method of controlling a supply of purge gas to reduce leakage past a dynamic seal for sealing a vacuum chamber, the dynamic seal comprising at least a first sealing member having opposing first and second sides, the method comprising:
determine a first operating pressure on the first side of the first sealing member;
determine a second operating pressure on the second side of the first sealing member;
determining a pressure differential between the first operating pressure on the first side of the first sealing member and the second operating pressure on the second side of the first sealing member;
controlling the supply of purge gas to the second side of the first sealing member in dependence on the determined pressure differential;
determine a rate of change of the first operating pressure; and
identify when the determined rate of change is less than a predefined rate of change threshold;
wherein the method comprises reducing or inhibiting the supply of purge gas when the determined rate of change of the first operating pressure is less than the predefined rate of change threshold. The supply of purge gas may be controlled in dependence on changes in the first operating pressure relative to the second operating pressure. The supply of purge gas to the second side of the first sealing member may be controlled by increasing or decreasing the supply of purge gas in dependence on the comparison of the first and second operating pressures. The supply of purge gas may be controlled dynamically in dependence on changes in the first and second operating pressures relative to each other. By actively controlling the supply of purge gas, the pressure differential across the first sealing member may be controlled. At least in certain embodiments, fluid leakage past the first sealing member from the first side to the second side may be reduced. The supply of purge gas may be controlled to avoid an operating condition in which the first operating pressure is greater than the second operating pressure. By maintaining a positive pressure differential across the first sealing member, there is a reduced risk of a reverse flow which may transport process materials past the seal, thereby contaminating bearings and other drive components, including the lubrication system.

The method may also comprise controlling the supply of purge gas to the second side of the first sealing member in dependence on the first operating pressure. At least in certain embodiments this may help to reduce or avoid degradation of the ultimate vacuum performance.

Alternatively, or in addition, the method may comprise controlling the supply of purge gas to the second side of the first sealing member in dependence on changes in the first operating pressure and/or the second operating pressure. The method may comprise controlling the supply of purge gas until changes in the first operating pressure and/or the second operating pressure are less than a predefined pressure change threshold over a predefined time period.

The dynamic seal may be associated with a vacuum chamber. A vacuum pump may be provided to create a vacuum in the vacuum chamber. The dynamic seal may, for example, be associated with a rotary shaft of the vacuum pump. The first side of the first sealing member may be an inboard side in fluid communication with the vacuum chamber. The second side of the first sealing member may be an outboard side separated from or isolated from the vacuum chamber. The second side of the first sealing member may, for example, be in communication with an oil box.

Controlling the supply of purge gas may comprise increasing the supply of purge gas when the determined pressure differential is such that the second operating pressure is less than or equal to the first operating pressure. Alternatively, or in addition, controlling the supply of purge gas may comprise reducing the supply of purge gas when the determined pressure differential is such that the first operating pressure is greater than the second operating pressure.

Controlling the supply of purge gas may comprise increasing the supply of purge gas when the determined pressure differential is less than or equal to a predefined first pressure differential threshold. Alternatively, or in addition, controlling the supply of purge gas may comprise decreasing the supply of purge gas when the difference between the first operating pressure and the second operating pressure is greater than a predefined second pressure differential threshold. The first pressure differential threshold and the second pressure differential threshold may be the same as each other or may be different from each other. The first pressure differential threshold may, for example, be 50 mbar, 100 mbar, 150 mbar, 200 mbar or 250 mbar. The second pressure differential threshold may, for example, be 50 mbar, 100 mbar, 150 mbar, 200 mbar or 250 mbar.

The method may comprise determining a rate of change of the pressure differential. Controlling the supply of purge gas may comprise increasing the supply of purge gas when the rate of change of the pressure differential is greater than or equal to a predefined rate change threshold. Alternatively, or in addition, controlling the supply of purge gas may comprise reducing the supply of purge gas when the determined pressure differential is such that the first operating pressure is greater than the second operating pressure.

The pressure differential represents a difference in pressure between the first operating pressure and the second operating pressure. Determining the pressure differential may comprise subtracting the first operating pressure from the second operating pressure.

The method may comprise controlling the supply of purge gas in dependence on the determined pressure differential when the second operating pressure is less than or equal to a predefined operating pressure threshold. The supply of purge gas may not be controlled in dependence on the determined pressure differential when the second operating pressure is greater than the predefined operating pressure threshold. The predefined operating pressure threshold may, for example, be atmospheric pressure.

As outlined above, the dynamic seal may be used to seal a vacuum chamber. A vacuum pump may be provided for pumping air from the vacuum chamber to create a vacuum. In use, the first operating pressure may be less than atmospheric pressure; and/or the second operating pressure may be reduced to less than atmospheric pressure. When the vacuum pump is operating, the first operating pressure may be less than the second operating pressure. When the vacuum pump is deactivated, gas may be drawn into the vacuum chamber (for example through an exhaust port). The first operating pressure may thereby increase to atmospheric pressure after the vacuum pump is deactivated. However, the first sealing member may result in a more gradual increase in the second operating pressure. Thus, the second operating pressure may be less than the first operating pressure following deactivation of the vacuum pump, for example after shutdown of the vacuum pump. The method may comprise continuing to monitor the first operating pressure and/or the second operating pressure after the vacuum pump is deactivated. The method may comprise controlling the supply of purge gas until the second operating pressure is greater than or equal to the predefined operating pressure threshold following deactivation of the vacuum pump. The predefined operating pressure threshold may, for example, be defined as atmospheric pressure. Thus, the supply of purge gas may be controlled until the second operating pressure is at least substantially equal to atmospheric pressure.

The purge gas may be supplied at a first pressure when the vacuum pump is in a first operating mode. The vacuum pump may, for example, operate in the first operating mode may to establish the vacuum in the vacuum chamber. The purge gas may be supplied at a second pressure when the operating speed of the vacuum pump is reduced or the vacuum pump is deactivated. The second pressure may be greater than the first pressure. Thus, the supply of the purge gas increases.

The method may comprise maintaining the supply of purge gas in dependence on a change or a rate of change of the first operating pressure and/or the second operating pressure. The method may comprise supplying the purge gas until changes in the first operating pressure are less than a predefined pressure change threshold over a predefined time period. The method may comprise stopping or reducing the supply of purge gas when the first operating pressure stabilises. The method comprises closing the control valve when a rate of change of the first operating pressure is less than a predefined rate of change threshold.

The method(s) described herein may comprise opening a purge gas supply valve to increase the supply of purge gas; and closing the purge gas supply valve to decrease the supply of purge gas.

The method may optionally comprise providing a regulated supply of purge gas to the second side of the first sealing member. The regulated supply may, for example, comprise a steady-state supply of purge gas. The regulated supply may be a continuous supply which is maintained irrespective of the determined pressure differential or the determined operating speed of the vacuum pump. The regulated supply of purge gas may be maintained in parallel to the controlled supply. A flow restrictor may be provided to restrict the regulated supply of purge gas.

According to a further aspect of the present invention there is provided a non-transitory computer-readable medium having a set of instructions stored therein which, when executed, cause a processor to perform the method described herein.

According to a further aspect of the present invention there is provided a controller for controlling a supply of purge gas to reduce leakage past a dynamic seal for sealing a vacuum chamber, the dynamic seal comprising at least a first sealing member having opposing first and second sides, the controller being configured to:
receive a first operating pressure signal from a first operating pressure sensor disposed on the first side of the first sealing member, the first operating pressure signal indicating a first operating pressure;
receive a second operating pressure signal from a second operating pressure sensor disposed on the second side of the first sealing member, the second operating pressure signal indicating a second operating pressure;
determine a pressure differential between the first operating pressure on the first side of the first sealing member and the second operating pressure on the second side of the first sealing member;
control the supply of purge gas to the second side of the first sealing member in dependence on the determined pressure differential;
determine a rate of change of the first operating pressure; and
identify when the determined rate of change is less than a predefined rate of change threshold;
wherein the controller is configured to output a control valve signal to control a control valve to reduce or inhibit the supply of purge gas when the determined rate of change of the first operating pressure is less than the predefined rate of change threshold.

The controller comprises a processor for determining the pressure differential. The processor is connected to a system memory. The processor is configured to receive a first operating pressure signal from a first operating pressure sensor disposed on the first side of the first sealing member. The first operating pressure signal indicates the first operating pressure. The processor is configured to receive a second operating pressure signal from a second operating pressure sensor disposed on the second side of the first sealing member. The second operating pressure signal indicates the second operating pressure. The processor determines the pressure differential by comparing the first and second operating pressures. For example, the processor may subtract the second operating pressure from the first operating pressure. The processor is configured to output a control valve signal to control the supply of purge gas. The control valve signal is generated in dependence on changes in the first and second operating pressures relative to each other.

The controller may be configured to control the supply of purge gas to the second side of the first sealing member in dependence on the first operating pressure.

The controller may be configured to control the supply of purge gas to the second side of the first sealing member in dependence on changes in the first operating pressure and the second operating pressure. The controller may be configured to control the supply of purge gas until changes in the first operating pressure and/or the second operating pressure are less than a predefined pressure change threshold over a predefined time period.

Alternatively, the controller may comprise a mechanical valve for controlling the supply of purge gas (not claimed). The mechanical valve may comprise a pressure differential regulator. The pressure differential regulator may comprise a diaphragm. Opposing sides of the diaphragm may be in communication with the first and second sides of the first sealing member. The pressure differential may be determined in dependence on a position of the diaphragm. The diaphragm may be connected to a valve member for controlling the supply of purge gas.

The controller may control the supply of purge gas to the second side of the first sealing member in dependence on changes in a first operating pressure on the first side of the first sealing member relative to a second operating pressure on the second side of the first sealing member.

The controller may be configured to increase the supply of purge gas when the determined pressure differential indicates that the second operating pressure is less than or equal to the first operating pressure. Alternatively, or in addition, the controller may be configured to reduce the supply of purge gas when the determined pressure differential indicates that the first operating pressure is greater than the second operating pressure.

The controller may be configured to increase the supply of purge gas when the determined pressure differential is less than or equal to a predefined first pressure differential threshold. Alternatively, or in addition, the controller may be configured to decrease the supply of purge gas when the difference between the first operating pressure and the second operating pressure is greater than a predefined second pressure differential threshold.

The pressure differential represents a difference in pressure between the first operating pressure and the second operating pressure. The controller may be configured to determine the pressure differential by subtracting the first operating pressure from the second operating pressure.

The controller may be configured to control the supply of purge gas in dependence on the determined pressure differential when the second operating pressure is less than or equal to a predefined operating pressure threshold. The supply of purge gas may not be controlled in dependence on the determined pressure differential when the second operating pressure is greater than the predefined operating pressure threshold. The predefined operating pressure threshold may, for example, be atmospheric pressure.

The purge gas may be supplied at a first pressure when the vacuum pump is in a first operating mode. The vacuum pump may, for example, operate in the first operating mode may to establish the vacuum in the vacuum chamber. The purge gas may be supplied at a second pressure when the operating speed of the vacuum pump is reduced or the vacuum pump is deactivated. The second pressure may be greater than the first pressure. Thus, the supply of the purge gas increases.

The controller may be configured to open a purge gas supply valve to increase the supply of purge gas; and to close the purge gas supply valve to reduce or inhibit the supply of purge gas.

The controller may be configured to control the supply of the purge gas in dependence on a change or a rate of change of the first operating pressure and/or the second operating pressure. The controller may, for example, continue to supply the purge gas until changes in the first operating pressure are less than a predefined pressure change threshold over a predefined time period. The controller may be configured to stop or reduce the supply of purge gas when the first operating pressure stabilises. The controller may be configured to close the control valve when a rate of change of the first operating pressure is less than a predefined rate of change threshold.

According to a further aspect of the present invention there is provided a vacuum system comprising a controller as described herein.

According to a further aspect of the present invention there is provided a dynamic sealing system for a vacuum system, the dynamic sealing system comprising:
at least a first sealing member for sealing a vacuum chamber, the first sealing member having opposing first and second sides;
a purge gas supply system for supplying a purge gas to the second side of the first sealing member; and
a controller of the type described herein for controlling the purge gas supply system;
the controller being configured to control the purge gas supply system to control supply of purge gas to the second side of the first sealing member in dependence on the determined pressure differential; and to output a control valve signal to control a control valve to reduce or inhibit the supply of purge gas when the determined rate of change of the first operating pressure is less than the predefined rate of change threshold.

The controller comprises a processor for determining the pressure differential. The processor may be connected to a system memory. The processor is configured to receive a first operating pressure signal from a first operating pressure sensor disposed on the first side of the first sealing member. The first operating pressure signal indicates the first operating pressure. The processor is configured to receive a second operating pressure signal from a second operating pressure sensor disposed on the second side of the first sealing member. The second operating pressure signal indicates the second operating pressure. The processor determines the pressure differential by comparing the first and second operating pressures. For example, the processor may subtract the second operating pressure from the first operating pressure. The processor is configured to output a control valve signal to control the supply of purge gas. The control valve signal may be generated in dependence on changes in the first and second operating pressures relative to each other.

The controller may comprise a mechanical valve for controlling the supply of purge gas (not claimed). The mechanical valve may comprise a pressure differential regulator. The pressure differential regulator may comprise a diaphragm. Opposing sides of the diaphragm may be in communication with the first and second sides of the first sealing member. The pressure differential may be determined in dependence on a position of the diaphragm. The diaphragm may be connected to a valve member for controlling the supply of purge gas.

The controller may be configured to increase the supply of purge gas when the second operating pressure is less than or equal to the first operating pressure. Alternatively, or in addition, the controller may be configured to reduce the supply of purge gas when the first operating pressure is greater than the second operating pressure.

The controller may be configured to determine the pressure differential by subtracting the first operating pressure from the second operating pressure.

The controller may be configured to increase the supply of purge gas when the determined pressure differential is less than or equal to a predefined first pressure differential threshold. Alternatively, or in addition, the controller may be configured to decrease the supply of purge gas when the difference between the first operating pressure and the second operating pressure is greater than a predefined second pressure differential threshold.

The controller may be configured to control the supply of purge gas when the second operating pressure is less than or equal to a predefined operating pressure threshold. The processor may be configured not to control the supply of purge gas when the second operating pressure is greater than the predefined operating pressure threshold. The predefined operating pressure threshold may be atmospheric pressure.

The purge gas may be supplied at a first pressure when the vacuum pump is in a first operating mode. The vacuum pump may, for example, operate in the first operating mode may to establish the vacuum in the vacuum chamber. The purge gas may be supplied at a second pressure when the operating speed of the vacuum pump is reduced or the vacuum pump is deactivated. The second pressure may be greater than the first pressure. Thus, the supply of the purge gas increases.

The controller may be configured to control the supply of the purge gas in dependence on a change or a rate of change of the first operating pressure and/or the second operating pressure. The controller may, for example, continue to supply the purge gas until changes in the first operating pressure are less than a predefined pressure change threshold over a predefined time period. The controller may be configured to stop or reduce the supply of purge gas when the first operating pressure stabilises. The controller may be configured to close the control valve when a rate of change of the first operating pressure is less than a predefined rate of change threshold.

According to a further aspect (not claimed) there is provided a vacuum system comprising a dynamic sealing system as described herein.

### BRIEF DESCRIPTION OF THE DRAWINGS

One or more embodiments of the invention will now be described, by way of example only, with reference to the accompanying drawings, in which:
Figure 1 shows a schematic representation of a vacuum system incorporating a dynamic sealing system in accordance with an embodiment of the present invention;
Figure 2 shows a block diagram representing operation of a controller for the dynamic sealing system shown in Figure 1;
Figure 3 shows a first chart illustrating operation of a vacuum system without the dynamic sealing system according to the present invention; and
Figure 4 shows a first chart illustrating operation of the vacuum system incorporating the dynamic sealing system according to an embodiment of the present invention.

### DETAILED DESCRIPTION

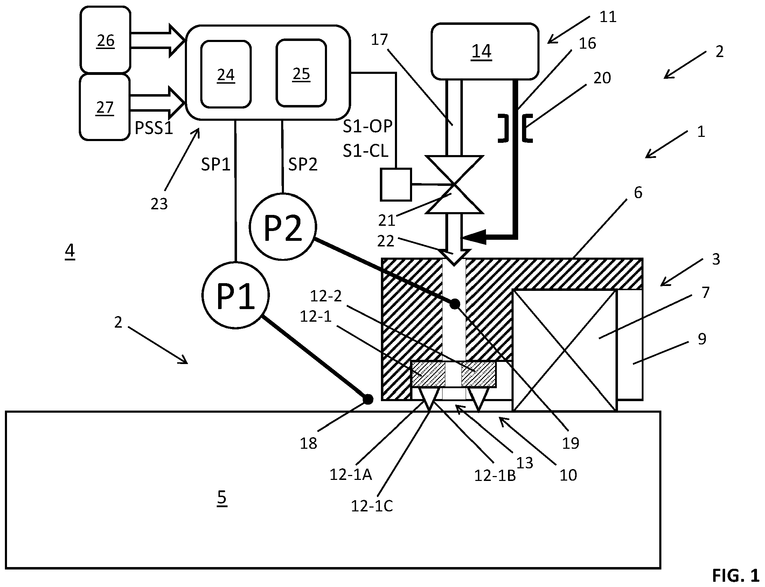

A dynamic sealing system 1 for a vacuum system 2 in accordance with an embodiment of the present invention is described herein with reference to the accompanying Figure 1.

The vacuum system 2 comprises a vacuum pump 3 operable to create a vacuum in a vacuum (process) chamber 4. The vacuum pump 3 comprises a rotor shaft 5 which is supported in a housing 6. The rotor shaft 5 is rotatable about a longitudinal axis X and is supported at a first end by a first shaft bearing 7. A second shaft bearing (not shown) is provided for supporting a second end of the rotor shaft 5. A (high vacuum) oil box 9 for containing a lubricant is provided for lubricating the first shaft bearing 7.

The dynamic sealing system 1 is configured to form and maintain a seal around the rotor shaft 5 between the vacuum chamber 4 and the first shaft bearing 7. The dynamic sealing system 1 comprises a lip seal (also known as a radial shaft seal) denoted generally by the reference numeral 10; and a purge gas supply system 11. The lip seal 10 in the present embodiment comprises a first sealing member 12-1 and a second sealing member 12-2. The first sealing member 12-1 is disposed in an inboard position relative to the vacuum chamber 4; and the second sealing member 12-2 is disposed in an outboard position relative to the vacuum chamber 4. The first and second sealing members 12-1, 12-2 each comprise an annular flange which, in use, contacts an outer surface of the rotor shaft 5 to form a seal. The first and second sealing members 12-1, 12-2 are spaced apart from each other along the rotational axis X of the rotor shaft 5. An annular chamber 13 is formed between the first and second sealing members 12-1, 12-2. The first and second sealing members 12-1, 12-2 have substantially the same configuration. The first sealing member 12-1 has opposing first and second sides 12-1A 12-1B; and an annular tip 12-1C for contacting the rotor shaft 5 to form a seal. The first side 12-1A is an inboard side in fluid communication with the vacuum chamber 4. The second side 12-1B is an outboard side isolated from the vacuum chamber 4.

The purge gas supply system 11 is configured to supply a purge gas, such as nitrogen (N2) to the annular chamber 13 at a nominal flow rate. The purge gas supply system 11 comprises a reservoir 14 for storing the purge gas; a regulated supply line 16; a controlled supply line 17; a first operating pressure sensor 18; and a second operating pressure sensor 19. The regulated supply line 16 comprises a flow restrictor 20 for restricting the flow of purge gas through the regulated supply line 16. The regulated supply line 16 provides a metered, steady-state flow rate of purge gas to the annular chamber 13. The controlled supply line 17 comprises a control valve 21, such as a solenoid valve, which is operable selectively to open and close the controlled supply line 17. The control valve 21 is configurable in at least a first open position and a second closed position. The control valve 21 may be configurable in one or more intermediate positions to provide further control of the supply of purge gas through the controlled supply line 17. The control valve 21 may be continuously variable between the first open position and the second closed position. The regulated supply line 16 and the controlled supply line 17 are arranged in parallel to each other and are both connected to a common supply line 22 which is in fluid communication with the annular chamber 13. A continuous supply of purge gas is provided by the regulated supply line 16 to the annular chamber 13. The first operating pressure sensor 18 measures the pressure in the vacuum chamber 4; and the second operating pressure sensor 19 measures the pressure in the annular chamber 13.

A controller 23 in the form of an electronic control unit (ECU) is provided for controlling operation of the control valve 21. The controller 23 comprises a processor 24 and a system memory 25. A set of computational instructions is stored on the system memory 25. When executed, the computational instructions cause the processor 24 to perform the method(s) described herein. The controller 23 is connected to a power supply 26, as shown in Figure 1. As described herein, the processor 24 is configured to generate a control valve signal S1 for selectively opening and closing the control valve 21. The controller 23 is in communication with the first and second operating pressure sensors 18, 19. In particular, the controller 23 receives a first pressure signal SP1 from the first operating pressure sensor 18; and a second pressure signal SP2 from the second operating pressure sensor 19. The first pressure signal SP1 represents a first operating pressure P1 in the vacuum chamber 4. The second pressure signal SP2 represents a second operating pressure P2 in the annular chamber 13. The controller 23 is configured to compare the first and second operating pressures P1, P2 to determine a pressure differential ΔP across the first sealing member 12-1. In the present embodiment, the processor 24 is configured to determine the pressure differential ΔP by subtracting the first operating pressure P1 from the second operating pressure P2 (ΔP=P1-P2). The controller 23 may optionally also receive a pump status signal PSS1 from a pump controller 27. indicating a current status of the vacuum pump 3, for example to indicate that the vacuum pump 3 is currently activated (PUMP ON) or deactivated (PUMP OFF). The pump status signal PSS1 could optionally indicate a current operating speed of the vacuum pump 3.

The processor 24 is configured to generate the control valve signal S1 in dependence on the comparison of the first and second operating pressures P1, P2. If the second operating pressure P2 is less than the first operating pressure P1, the resulting pressure gradient across the first sealing member 12-1 will tend to promote the flow of process gases from the vacuum chamber 4 past the first sealing member 12-1 and into the annular chamber 13 (and potentially also into the oil box 9). As outlined above, the processor 24 determines the pressure differential ΔP by subtracting the first operating pressure P1 from the second operating pressure P2. When the operating conditions are such that the second operating pressure P2 is less than the first operating pressure P1, the determined pressure differential ΔP is a negative variable (-ve); this is referred to herein as an "adverse pressure differential ΔP" since it promotes leakage past the first sealing member 12-1 from the first side 12-1A to the second side 12-1B. (It will be understood that the pressure differential ΔP could be calculated by subtracting the second operating pressure P2 from the first operating pressure P1 and a pressure differential ΔP which is a positive variable (+ve) would indicate an "adverse pressure differential ΔP".)

In order to suppress or prevent the adverse pressure differential being established across the first sealing member 12-1, the processor 24 is configured to control the control valve 21 to increase the supply of purge gas to the annular chamber 13 when the comparison of the first and second operating pressures P1, P2 determines that the second operating pressure P2 is less than or equal to the first operating pressure P1 (P2≤P1). The processor 24 generates an open control valve signal S1-OP at least partially to open the control valve 21 to increase the supply of purge gas through the controlled supply line 17. The increased supply of purge gas to the annular chamber 13 increases the second operating pressure P2. Conversely, the processor 24 is configured to control the control valve 21 to reduce the supply of purge gas to the annular chamber 13 when the comparison of the first and second operating pressures P1, P2 determines that the second operating pressure P2 is greater than the first operating pressure P1 (P2>P1). The processor 24 generates a close control valve signal S1-CL at least partially to close the control valve 21 to reduce or to inhibit the supply of purge gas through the controlled supply line 17. Closing the control valve 21 may result in a decrease in the second operating pressure P2. If the control valve 21 is already in the closed configuration, the control valve 21 is maintained in the closed configuration in response to the close control valve signal S1-CL. In the present embodiment, the regulated supply line 16 is substantially unaffected by the operation of the control valve 21 and, in use, the purge gas continues to be supplied to the annular chamber 13 via the regulated supply line 16 irrespective of the operating state of the control valve 21.

The processor 24 continuously monitors the first and second operating pressures P1, P2 at least substantially in real time. The controller 23 provides active control of the second operating pressure P2, thereby reducing or preventing establishment of an adverse pressure gradient ΔP. The controller 23 controls the control valve 21 to control the supply of purge gas to the annular chamber 13 while the vacuum pump 3 is operating. Alternatively, or in addition, the controller 23 may control the control valve 21 for a period of time after deactivation of the vacuum pump 3, for example as part of a shutdown procedure of the vacuum system 2. When the vacuum pump 3 is deactivated, air is typically drawn into the vacuum chamber 4 for example through an exhaust port (not shown) of the vacuum pump 3. The first operating pressure P1 increases and returns to atmospheric pressure. Since the dynamic sealing system 1 establishes a seal around the rotor shaft 5, the second operating pressure P2 tends to increase at a slower rate than the first operating pressure P1. Thus, the second operating pressure P2 may return to atmospheric pressure more slowly than the first operating pressure P1. The second operating pressure P2 may be less than the first operating pressure P1 following deactivation of the vacuum pump 3. In a prior art vacuum system which does not control the supply of purge gas to the lip seal 10, an adverse pressure differential ΔP could be established following deactivation of the vacuum pump 3. However, the controller 23 according to the present embodiment is configured to control operation of the control valve 21 to reduce or inhibit an adverse pressure differential ΔP across the first sealing member 12-1 following deactivation of the vacuum pump 3. The controller 23 may continue to control the supply of purge gas to the annular chamber 13 for a predetermined time period. Alternatively, or in addition, the controller 23 may continue to control the supply of purge gas until the first operating pressure P1 has at least substantially stabilised. The controller 23 may, for example, continue to control the purge gas supply until it is determined that changes in the first operating pressure P1 are less than a predefined pressure change threshold over a predefined time period. The predefined time period may, for example, be thirty (30) seconds, sixty (60) seconds, ninety (90) seconds, one hundred and twenty (120) seconds, or longer. By way of example, the controller 23 may maintain the purge gas supply until changes in the first operating pressure P1 are less than 100mbar in a rolling time period of two (2) minutes. Upon determining that changes in the first operating pressure P1 are less than 100mbar over a time period of two (2) minutes, the controller 23 is configured to close the control valve 21. The controller 23 may determine a rate of change of the first operating pressure (*dP1*/*dt*) and identify when the rate of change is less than a predefined rate of change threshold. When the rate of change of the first operating pressure P1 is less than the predefined rate of change threshold, the controller 23 may close the control valve 21 to prevent the supply of the purge gas. The rate of change in the first operating pressure P1 (*dP1*/*dt*) may be determined over a predefined time period.

The processor 24 of the dynamic sealing system 1 is configured to generate the open control valve signal S1-OP to open the control valve 21 when the second operating pressure P2 is less than or equal to the first operating pressure P1 (P2≤P1). The processor 24 may be modified to generate the open control valve signal S1-OP when the pressure differential ΔP calculated by subtracting the first operating pressure P1 from the second operating pressure P2 (ΔP=P2-P1) is less than or equal to a predefined pressure differential threshold. The predefined pressure differential threshold may be a positive variable (+ve). Thus, the supply of purge gas may be increased even if the second operating pressure P2 is greater than the first operating pressure P1, albeit with a margin corresponding to the predefined pressure differential threshold. (It will be understood that the predefined pressure differential threshold may be a negative variable (-ve) if the pressure differential ΔP is calculated by subtracting the second operating pressure P2 from the first operating pressure P1.)

In a variant, the controller 23 could be configured to increase the supply of purge gas through the controlled supply line 17 to the annular chamber 13 only when the adverse pressure differential ΔP has a magnitude greater than or equal to a predefined pressure differential threshold. If an adverse pressure differential ΔP is detected having a magnitude greater than the predefined pressure differential threshold, the processor 24 is configured to generate the open control valve signal S1-OP to open the control valve 21 to increase the supply of purge gas through the controlled supply line 17. Conversely, the processor 24 is configured to decrease the supply of purge gas through the controlled supply line 17 to the annular chamber 13 (or continue to inhibit the supply of purge gas through the controlled supply line 17 to the annular chamber 13) when an adverse pressure differential ΔP is detected having a magnitude less than the predefined pressure differential threshold. If an adverse pressure differential ΔP is detected having a magnitude less than the predefined pressure differential threshold, the processor 24 generates the close control valve signal S1-CL to close the control valve 21 to reduce the supply of purge gas through the controlled supply line 17. In use, the pressure differential ΔP across the first sealing member 12-1 is maintained positive, thereby reducing a risk of reverse flow which may transport process materials from the vacuum chamber 4 past the seal lip seal 10 potentially causing contamination of the first shaft bearing 7 and other drive components, such as the oil box 9.

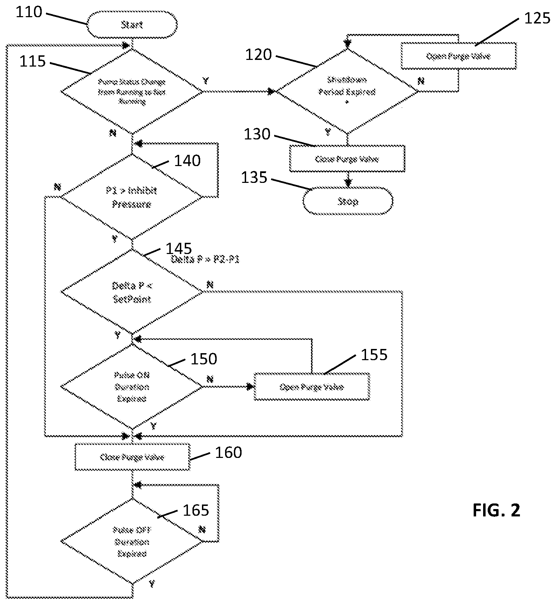

The operation of the dynamic sealing system 1 will now be described with reference to a block diagram 100 shown in Figure 2. The vacuum system 2 is activated and the vacuum pump 3 operates to establish a vacuum in the vacuum chamber 4. The controller 23 is activated (BLOCK 110). A check is performed to determine if an operating status of the vacuum pump 3 (BLOCK 115). If the controller 23 determines that the operating status of the vacuum pump 3 changes from activated (i.e. running) to deactivated (i.e. not running), the controller 23 monitors a shutdown period. A check is performed to determine if the shutdown period has expired (BLOCK 120). If the shutdown period has not expired, the controller 23 opens the control valve 21 (BLOCK 125). The controller 23 continues to check if the shutdown period has expired. If the controller 23 determines that the shutdown period has expired, the control valve 21 is closed (BLOCK 130); and the process ends (BLOCK 135). In a variant, rather than determine whether a shutdown period has expired (BLOCK 120), the controller 23 can monitor the first operating pressure P1 to determine when the first operating pressure P1 has stabilised sufficiently to enable the control valve 21 to be closed. The controller 23 may determine that the first operating pressure P1 is stable when a pressure gradient corresponding to a change within a predetermined pressure range, for example 100 mbar, within a rolling predefined time period, for example 30 seconds. The controller 23 may open the control valve 21 until the first operating pressure P1 has stabilised.

If the controller 23 determines that the operating status of the vacuum pump 3 has not changed from activated to deactivated (BLOCK 115), i.e. the vacuum pump 3 is still running, the controller 23 reads the first and second pressure signals SP1, SP2 from the first and second operating pressure sensors 18, 19 indicating the first operating pressure P1 in the vacuum chamber 4 and the second operating pressure P2 in the annular chamber 13 respectively. The controller 23 determines if the first operating pressure P1 is greater than a predefined pressure threshold (BLOCK 140). If the first operating pressure P1 is less than or equal to the predefined pressure threshold, the controller 23 closes the control valve 21 (BLOCK 160). If the first operating pressure P1 is greater than the predefined pressure threshold, the controller 23 determines the pressure differential ΔP across the first sealing member 12-1 by subtracting the first operating pressure P1 from the second operating pressure P2 (ΔP=P2-P1). The controller 23 compares the pressure differential ΔP to a predefined pressure setpoint SP1 (BLOCK 145). If the pressure differential ΔP is greater than the pressure setpoint SP1, the controller 23 closes the control valve 21 (BLOCK 160). If the pressure differential ΔP is less than the pressure setpoint SP1, the controller 23 checks whether a pulse ON duration period for the vacuum pump 3 has expired (BLOCK 150). If the pulse ON duration has not expired, the controller 23 opens the control valve 21 (BLOCK 155). This process continues until the pulse ON duration period has expired. Upon expiry of the pulse ON duration period, the controller 23 closes the control valve 21 (BLOCK 160). After closing the control valve 21, the controller 23 implements a check to determine if a pulse OFF duration has expired (BLOCK 165). When the pulse OFF duration expires, the controller 23 reverts to monitoring the operating status of the vacuum pump 3 (BLOCK 115).

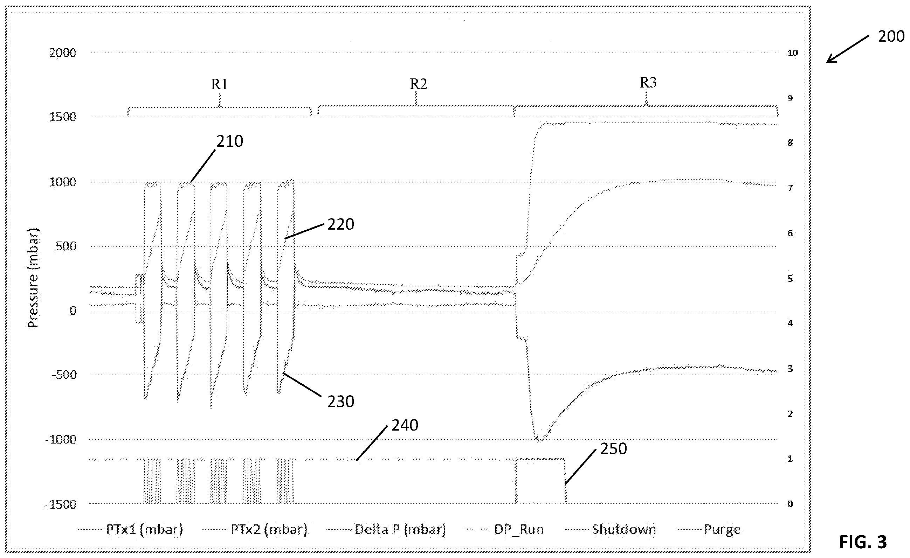

A first chart 200 representing operation of the dynamic seal system 1 without operating the control valve 21 to control the supply of purge gas is shown in Figure 3. A first plot 210 represents the first operating pressure P1 measured in the vacuum chamber 4; and a second plot 220 represents the second operating pressure P2 measured in the annular chamber 13. A third plot 230 represents the instantaneous pressure differential (ΔP=P2-P1). A fourth plot 240 represents the pump status signal PSS1 indicating the current status of the vacuum pump 3. The fourth plot 240 is a digital signal with a "0" value indicating that the vacuum pump 3 is not operating (PUMP OFF); and a "1" value indicating that the vacuum pump 3 is operating (PUMP ON). A fifth plot 250 represents the desired state of the control valve 21. The fifth plot 250 is a digital signal with a "0" value indicating that the control valve 21 is closed; and a "1" value indicating that the control valve 21 is open. The vacuum chamber 4 may be cycled rapidly by opening and closing a release valve (not shown). During such a cycling operation (represented in a first region R1), the first operating pressure P1 in the vacuum chamber 4 increases to atmospheric pressure before returning to the vacuum conditions. The first plot 210 has a generally square waveform as the first operating pressure P1 responds substantially instantaneously. There is a corresponding increase in the second operating pressure P2, but the seal formed between the first sealing member 12-1 and the rotor shaft 5 results in the second operating pressure P2 increasing at a slower rate than the first operating pressure P1. As a result, cycling of the vacuum chamber 4 causes the second plot 220 to follow a saw-tooth profile. The peak second operating pressure P2 is less than the peak first operating pressure P1 during this operation. Consequently, an adverse pressure differential ΔP is established across the first sealing member 12-1, as represented by the third plot 230. During steady-state operation of the vacuum system 2 (represented in a second region R2), the pressure differential ΔP is greater than zero (0). Following shutdown of the vacuum pump 3 (represented in a third region R3), the first operating pressure P1 increases to atmospheric pressure more quickly than the second operating pressure P2 and the pressure differential ΔP becomes less than zero (0). Consequently, an adverse pressure differential ΔP is established across the first sealing member 12-1.

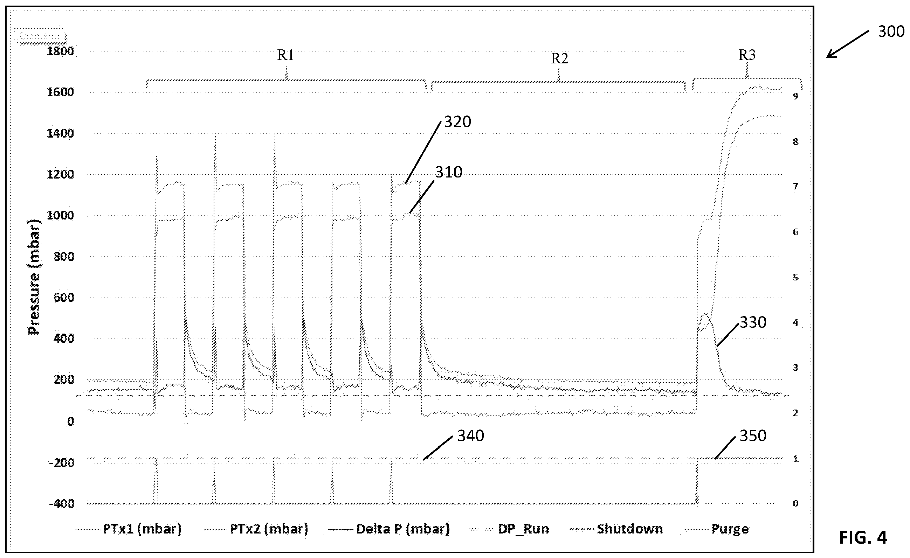

A second chart 300 representing operation of the dynamic sealing system 1 is shown in Figure 4 by way of example. A first plot 310 represents the first operating pressure P1 measured in the vacuum chamber 4; and a second plot 320 represents the second operating pressure P2 measured in the annular chamber 13. A third plot 330 represents the instantaneous pressure differential (ΔP=P2-P1). A fourth plot 340 represents the pump status signal PSS1 indicating the current status of the vacuum pump 3. The fourth plot 340 is a digital signal with a "0" value indicating that the vacuum pump 3 is not operating (PUMP OFF); and a "1" value indicating that the vacuum pump 3 is operating (PUMP ON). A fifth plot 350 represents the operating state of the control valve 21. The fifth plot 350 is a digital signal with a "0" value indicating that the control valve 21 is closed; and a "1" value indicating that the control valve 21 is open. As represented by the third plot 330, the supply of purge gas to the annular chamber 13 ensures that the instantaneous pressure differential ΔP remains greater than zero (0). During cycling of the vacuum chamber 4 (first region R1), the first and second operating pressures P1, P2 both have a generally square waveform, as represented by the first and second plots 310, 320. The supply of purge gas to the annular chamber 13 results in the second operating pressure P2 having a peak value which is greater than the peak first operating pressure P1. Consequently, an adverse pressure differential ΔP is prevented. Instead, the pressure differential ΔP remains greater than zero (0). Similarly, during shutdown (third region R3), the pressure differential ΔP remains greater than zero (0) following deactivation of the vacuum pump 3. In the illustrated example, the pressure differential ΔP is greater than 100mbar (ΔP>100mbar). The controller 23 is configured to control operation of the control valve 21 in dependence on a predefined pressure setpoint SP1. If the pressure differential ΔP is less than the pressure setpoint SP1, the controller 23 is configured to close the control valve 21. If the pressure differential ΔP is greater than the pressure setpoint SP1, the controller 23 is configured to open the control valve 21 (or maintain the control valve 21 in an open state). The pressure setpoint may be defined as 50mbar, 100mbar, 200mbar, for example.

The embodiment described above comprises a controller 23 having a processor 24 for comparing the first and second operating pressures P1, P2. In a further embodiment (not claimed), a mechanical valve may be used to control the supply of purge gas to the annular chamber 13. The mechanical valve may be configured to determine the pressure differential between the first and second operating pressures P1, P2. The mechanical valve may, for example, comprise a differential pressure regulator for performing a direct comparison of the first and second operating pressures P1, P2. The differential pressure regulator may, for example, be in fluid communication with the vacuum chamber 4 and the annular chamber 3. The differential pressure regulator may, for example, comprise a diaphragm which is displaced in dependence on the first and second operating pressures P1, P2 acting on opposing faces thereof. The displacement of the diaphragm may selectively seat and unseat a valve to control the supply of purge gas. When the second operating pressure P2 is less than or equal to the first operating pressure, the pressure-differential valve may be configured to open so as to supply the purge gas to the annular chamber 13. A shut-off valve, for example a solenoid valve, may be provided to close the controlled supply line 17. The shut-off valve may be configured to close the controlled supply line 17 upon expiry of a predetermined time period following deactivation of the vacuum pump 3. The purge gas supply system 11 may thereby be isolated from the vacuum chamber 3.

It will be appreciated that various changes and modifications can be made to the present invention without departing from the scope of the present application as defined by the claims.

The controller 23 for controlling the purge gas supply system 11 has been described herein as a standalone unit. It will be understood that the controller 23 could be incorporated into another control unit, for example an on-board controller for the vacuum system 2.

The controller 23 has been described herein as measuring the first and second operating pressures P1, P2. At least one of the operating pressures P1, P2 could be modelled. For example, the first operating pressure P1 could be modelled based on an operating state of the vacuum pump 3 (ON/OFF/SPEED) and/or a purge valve state (OPEN or CLOSED).

**REFERENCE SIGNS**

| **Reference Sign** | **Component** |
|---|---|
| **1** | dynamic sealing system 1 |
| **2** | vacuum system 2 |
| **3** | vacuum pump 3 |
| **4** | vacuum chamber 4 |
| **5** | rotor shaft 5 |
| **6** | housing 6 |
| **7** | shaft bearing 7 |
| **9** | oil box 9 |
| **10** | lip seal 10 |
| **11** | purge gas supply system 11 |
| **12-1** | first sealing member 12-1 |
| **12-1A** | first side 12-1A |
| **12-1B** | second side 12-1B |
| **12-1C** | annular surface 12-1C |
| **12-2** | second sealing member 12-2 |
| **13** | annular chamber 13 |
| **14** | reservoir 14 |
| **16** | regulated supply line 16 |
| **17** | controlled supply line 17 |
| **18** | first operating pressure sensor 18 |
| **19** | second operating pressure sensor 19 |
| **20** | flow restrictor 20 |
| **21** | control valve 21 |
| **22** | common supply line 22 |
| **23** | controller 23 |
| **24** | processor 24 |
| **25** | system memory 25 |
| **26** | power supply 26 |
| **27** | pump controller 27 |
| **PSS1** | pump status signal |

## Claims

1. A method of controlling a supply of purge gas to reduce leakage past a dynamic seal (10) for sealing a vacuum chamber (4), the dynamic seal (10) comprising at least a first sealing member (12-1) having opposing first and second sides (12-1A, 12-1B), the method comprising:
determine a first operating pressure on the first side of the first sealing member (12-1);
determine a second operating pressure on the second side of the first sealing member (12-1);
determining a pressure differential (ΔP) between the first operating pressure (P1) on the first side of the first sealing member (12-1) and the second operating pressure (P2) on the second side of the first sealing member (12-1);
controlling the supply of purge gas to the second side of the first sealing member (12-1) in dependence on the determined pressure differential (ΔP);
determine a rate of change (dP1/dt) of the first operating pressure (P1); and
identify when the determined rate of change (dP1/dt) is less than a predefined rate of change threshold;
wherein the method comprises reducing or inhibiting the supply of purge gas when the determined rate of change (dP1/dt) of the first operating pressure (P1) is less than the predefined rate of change threshold.

2. A method as claimed in claim 1, wherein controlling the supply of purge gas comprises:
increasing the supply of purge gas when the determined pressure differential (ΔP) is such that the second operating pressure (P2) is less than or equal to the first operating pressure (P1).

3. A method as claimed in claim 1 or claim 2, wherein controlling the supply of purge gas comprises at least one of the following:
increasing the supply of purge gas when the determined pressure differential (ΔP) is less than or equal to a predefined first pressure differential (ΔP) threshold; and
decreasing the supply of purge gas when the difference between the first operating pressure (P1) and the second operating pressure (P2) is greater than a predefined second pressure differential (ΔP) threshold.

4. A method as claimed in any one of claims 1, 2 or 3, wherein the determining the pressure differential (ΔP) comprises subtracting the first operating pressure (P1) from the second operating pressure (P2).

5. A method as claimed in any one of claims 1 to 4 comprising controlling the supply of purge gas in dependence on the determined pressure differential (ΔP) when the second operating pressure (P2) is less than or equal to a predefined operating pressure threshold.

6. A method as claimed in any one of the preceding claims, wherein controlling the supply of purge gas comprises opening a purge gas supply valve (21) to increase the supply of purge gas, and closing the purge gas supply valve (21) to decrease the supply of purge gas.

7. A controller (23) for controlling a supply of purge gas to reduce leakage past a dynamic seal (10) for sealing a vacuum chamber (4), the dynamic seal (10) comprising at least a first sealing member (12-1) having opposing first and second sides (12-1A, 12-1B), the controller (23) comprising a processor and a non-transitory computer-readable medium having a set of instructions stored therein which, when executed, cause the processor to:
receive a first operating pressure signal from a first operating pressure sensor disposed on the first side of the first sealing member, the first operating pressure signal indicating a first operating pressure;
receive a second operating pressure signal from a second operating pressure sensor disposed on the second side of the first sealing member, the second operating pressure signal indicating a second operating pressure;
determine a pressure differential (ΔP) between the first operating pressure (P1) on the first side of the first sealing member (12-1) and the second operating pressure (P2) on the second side of the first sealing member (12-1);
output a control valve signal to control a control valve (21) to control the supply of purge gas to the second side of the first sealing member (12-1) in dependence on the determined pressure differential (ΔP);
**characterised in that** the controller is further configured to:
determine a rate of change (dP1/dt) of the first operating pressure (P1); and
identify when the determined rate of change (dP1/dt) is less than a predefined rate of change threshold;
wherein the controller (23) is configured to output a control valve signal to control the control valve (21) to reduce or inhibit the supply of purge gas when the determined rate of change (dP1/dt) of the first operating pressure (P1) is less than the predefined rate of change threshold.

8. A controller (23) as claimed in claim 7, wherein the controller (23) is configured to increase the supply of purge gas when the determined pressure differential (ΔP) indicates that the second operating pressure (P2) is less than or equal to the first operating pressure (P1).

9. A controller (23) as claimed in claim 7 or claim 8, wherein the controller (23) is configured to perform at least one of the following:
to increase the supply of purge gas when the determined pressure differential (ΔP) is less than or equal to a predefined first pressure differential (ΔP) threshold; and
to decrease the supply of purge gas when the difference between the first operating pressure (P1) and the second operating pressure (P2) is greater than a predefined second pressure differential (ΔP) threshold.

10. A controller (23) as claimed in any one of claims 7, 8 or 9, wherein the controller (23) is configured to determine the pressure differential (ΔP) by subtracting the first operating pressure (P1) from the second operating pressure (P2).

11. A controller (23) as claimed in any one of claims 7 to 10, wherein the controller (23) is configured to control the supply of purge gas in dependence on the determined pressure differential (ΔP) when the second operating pressure (P2) is less than or equal to a predefined operating pressure threshold.

12. A controller (23) as claimed in any one of claims 7 to 11, wherein the controller (23) is configured to open a purge gas supply valve (21) to increase the supply of purge gas, and to close the purge gas supply valve (21) to reduce or inhibit the supply of purge gas.

13. A vacuum system (2) comprising a controller (23) as claimed in any one claims 7 to 12.

14. A dynamic sealing system (1) for a vacuum system (2), the dynamic sealing system (1) comprising:
at least a first sealing member (12-1) for sealing a vacuum chamber (4), the first sealing member (12-1) having opposing first and second sides (12-1A, 12-1B);
a purge gas supply system for supplying a purge gas to the second side of the first sealing member (12-1); and
a controller (23) as claimed in any one of claims 7 to 13 for controlling the purge gas supply system the controller (23) being configured to control the purge gas supply system to control supply of purge gas to the second side of the first sealing member (12-1) in dependence on the determined pressure differential (ΔP); and to output a control valve signal to control a control valve to reduce or inhibit the supply of purge gas when the determined rate of change (dP1/dt) of the first operating pressure (P1) is less than the predefined rate of change threshold.

15. A dynamic sealing system (1) as claimed in claim 14, wherein the controller (23) is configured to perform at least one of the following:
to increase the supply of purge gas when the second operating pressure (P2) is less than or equal to the first operating pressure (P1); and
to reduce the supply of purge gas when the first operating pressure (P1) is greater than the second operating pressure (P2).

## Patentansprüche

1. Verfahren zum Steuern einer Zufuhr von Spülgas, um eine Leckage an einer dynamischen Dichtung (10) zum Abdichten einer Vakuumkammer (4) zu verringern, wobei die dynamische Dichtung (10) mindestens ein erstes Dichtungselement (12-1) mit einer ersten und einer zweiten Seite (12-1A, 12-1B), die einander gegenüberliegen, umfasst, wobei das Verfahren umfasst:
Bestimmen eines ersten Betriebsdrucks auf der ersten Seite des ersten Dichtungselements (12-1);
Bestimmen eines zweiten Betriebsdrucks auf der zweiten Seite des ersten Dichtungselements (12-1);
Bestimmen einer Druckdifferenz (ΔP) zwischen dem ersten Betriebsdruck (P1) auf der ersten Seite des ersten Dichtungselements (12-1) und dem zweiten Betriebsdruck (P2) auf der zweiten Seite des ersten Dichtungselements (12-1);
Steuern der Zufuhr von Spülgas zur zweiten Seite des ersten Dichtungselements (12-1) in Abhängigkeit von der bestimmten Druckdifferenz (ΔP);
Bestimmen einerÄnderungsrate (dP1/dt) des ersten Betriebsdrucks (P1) und
Erkennen, wenn die bestimmte Änderungsrate (dP1/dt) kleiner als ein vordefinierter Schwellenwert der Änderungsrate ist;
wobei das Verfahren ein Verringern oder Unterbinden der Zufuhr von Spülgas umfasst, wenn die bestimmte Änderungsrate (dP1/dt) des ersten Betriebsdrucks (P1) kleiner als der vordefinierte Schwellenwert für die Änderungsrate ist.

2. Verfahren nach Anspruch 1, wobei das Steuern der Zufuhr von Spülgas umfasst:
Erhöhen derZufuhrvon Spülgas, wenn die bestimmte Druckdifferenz (ΔP) so ist, dass der zweite Betriebsdruck (P2) kleiner als oder gleich dem ersten Betriebsdruck (P1) ist.

3. Verfahren nach Anspruch 1 oder Anspruch 2, wobei das Steuern der Zufuhr von Spülgas mindestens eins von Folgendem umfasst:
Erhöhen der Zufuhr von Spülgas, wenn die bestimmte Druckdifferenz (ΔP) kleiner oder gleich einem vordefinierten ersten Druckdifferenz- (ΔP-) Schwellenwert ist; und
Verringern der Zufuhrvon Spülgas, wenn die Differenz zwischen dem ersten Betriebsdruck (P1) und dem zweiten Betriebsdruck (P2) größer als ein vordefinierter zweiter Druckdifferenz- (ΔP-) Schwellenwert ist.

4. Verfahren nach einem der Ansprüche 1, 2 oder 3, wobei das Bestimmen der Druckdifferenz (ΔP) das Subtrahieren des ersten Betriebsdrucks (P1) vom zweiten Betriebsdruck (P2) umfasst.

5. Verfahren nach einem der Ansprüche 1 bis4, das umfasst, die Zufuhr von Spülgas in Abhängigkeit von der bestimmten Druckdifferenz (ΔP) zu steuern, wenn der zweite Betriebsdruck (P2) kleiner als oder gleich einem vordefinierten Betriebsdruckschwellenwert ist.

6. Verfahren nach einem der vorhergehenden Ansprüche, wobei das Steuern der Zufuhr von Spülgas ein Öffnen eines Spülgaszufuhrventils (21) zur Erhöhung der Zufuhr von Spülgas und ein Schließen des Spülgaszufuhrventils (21) zur Verringerung der Zufuhrvon Spülgas umfasst.

7. Steuereinrichtung (23) zum Steuern einer Zufuhr von Spülgas, um eine Leckage an einer dynamischen Dichtung (10) zum Abdichten einer Vakuumkammer (4) zu verringern, wobei die dynamische Dichtung (10) mindestens ein erstes Dichtungselement (12-1) mit einer ersten und einer zweiten Seite (12-1A, 12-1B) umfasst, die einander gegenüberliegen, wobei die Steuereinrichtung (23) einen Prozessor und ein nichtflüchtiges computerlesbares Medium mit einem Satz darin gespeicherter Anweisungen umfasst, die, wenn sie ausgeführt werden, den Prozessor veranlassen zum:
Empfangen eines ersten Betriebsdrucksignals von einem ersten Betriebsdrucksensor, der auf der ersten Seite des ersten Dichtungselements angeordnet ist, wobei das erste Betriebsdrucksignal einen ersten Betriebsdruck anzeigt;
Empfangen eines zweiten Betriebsdrucksignals von einem zweiten Betriebsdrucksensor, der auf der zweiten Seite des ersten Dichtungselements angeordnet ist, wobei das zweite Betriebsdrucksignal einen zweiten Betriebsdruck anzeigt;
Bestimmen einer Druckdifferenz (ΔP) zwischen dem ersten Betriebsdruck (P1) auf der ersten Seite des ersten Dichtungselements (12-1) und dem zweiten Betriebsdruck (P2) auf der zweiten Seite des ersten Dichtungselements (12-1);
Ausgeben eines Steuerventilsignals zum Steuern eines Steuerventils (21), um die Zufuhr von Spülgas zur zweiten Seite des ersten Dichtungselements (12-1) in Abhängigkeit von der bestimmten Druckdifferenz (ΔP) zu steuern;
**dadurch gekennzeichnet, dass** die Steuereinrichtung ferner konfiguriert ist zum:
Bestimmen einerÄnderungsrate (dP1/dt) des ersten Betriebsdrucks (P1) und
Erkennen, wenn die bestimmte Änderungsrate (dP1/dt) kleiner als ein vordefinierter Schwellenwert für die Änderungsrate ist;
wobei die Steuereinrichtung (23) so konfiguriert ist, dass sie ein Steuerventilsignal ausgibt, um das Steuerventil (21) so zu steuern, dass es die Zufuhr von Spülgas verringert oder unterbindet, wenn die bestimmte Änderungsrate (dP1/dt) des ersten Betriebsdrucks (P1) kleiner als der vordefinierte Schwellenwert für die Änderungsrate ist.

8. Steuereinrichtung (23) nach Anspruch 7, wobei die Steuereinrichtung (23) so konfiguriert ist, dass sie die Zufuhr von Spülgas erhöht, wenn die bestimmte Druckdifferenz (ΔP) anzeigt, dass der zweite Betriebsdruck (P2) kleiner als oder gleich dem ersten Betriebsdruck (P1) ist.

9. Steuereinrichtung (23) nach Anspruch 7 oder Anspruch 8, wobei die Steuereinrichtung (23) so konfiguriert ist, dass sie mindestens eins von Folgendem durchführt:
Erhöhen der Zufuhrvon Spülgas, wenn die bestimmte Druckdifferenz (ΔP) kleiner als oder gleich einem vordefinierten ersten Druckdifferenz- (ΔP-) Schwellenwert ist; und
Verringern der Zufuhr von Spülgas, wenn die Differenz zwischen dem ersten Betriebsdruck (P1) und dem zweiten Betriebsdruck (P2) größer als ein vordefinierter zweiter Druckdifferenz- (ΔP-) Schwellenwert ist.

10. Steuereinrichtung (23) nach einem der Ansprüche 7, 8 oder 9, wobei die Steuereinrichtung (23) so konfiguriert ist, dass sie die Druckdifferenz (ΔP) durch Subtraktion des ersten Betriebsdrucks (P1) vom zweiten Betriebsdruck (P2) bestimmt.

11. Steuereinrichtung (23) nach einem der Ansprüche 7 bis 10, wobei die Steuereinrichtung (23) so konfiguriert ist, dass sie die Zufuhr von Spülgas in Abhängigkeit von der bestimmten Druckdifferenz (ΔP) steuert, wenn der zweite Betriebsdruck (P2) kleiner als oder gleich einem vordefinierten Betriebsdruckschwellenwert ist.

12. Steuereinrichtung (23) nach einem der Ansprüche 7 bis 11, wobei die Steuereinrichtung (23) so konfiguriert ist, dass sie ein Spülgaszufuhrventil (21) öffnet, um die Zufuhr von Spülgas zu erhöhen, und das Spülgaszufuhrventil (21) schließt, um die Zufuhr von Spülgas zu verringern oder zu unterbinden.

13. Vakuumsystem (2) mit einer Steuereinrichtung (23) nach einem der Ansprüche 7 bis 12.

14. Dynamisches Dichtungssystem (1) für ein Vakuumsystem (2), wobei das dynamische Dichtungssystem (1) Folgendes umfasst:
mindestens ein erstes Dichtungselement (12-1) zum Abdichten einer Vakuumkammer (4), wobei das erste Dichtungselement (12-1) eine erste und eine zweite Seite (12-1A, 12-1B) aufweist, die einander gegenüberliegen;
ein Spülgaszufuhrsystem zum Zuführen eines Spülgases zur zweiten Seite des ersten Dichtungselements (12-1); und
eine Steuereinrichtung (23) nach einem der Ansprüche 7 bis 13 zum Steuern des Spülgas-Zufuhrsystems, wobei die Steuereinrichtung (23) so konfiguriert ist, dass sie das SpülgasZufuhrsystem steuert, um die Zufuhr von Spülgas zur zweiten Seite des ersten Dichtungselements (12-1) in Abhängigkeit von der bestimmten Druckdifferenz (ΔP) zu steuern; und ein Steuerventilsignal ausgibt, um ein Steuerventil zu steuern, um die Zufuhr von Spülgas zu verringern oder zu unterbinden, wenn die bestimmte Änderungsrate (dP1/dt) des ersten Betriebsdrucks (P1) kleiner als der vordefinierte Schwellenwert der Änderungsrate ist.

15. Dynamisches Dichtungssystem (1) nach Anspruch 14, wobei die Steuereinrichtung (23) so konfiguriert ist, dass sie mindestens eines von Folgendem durchführt:
Erhöhen der Zufuhr von Spülgas, wenn der zweite Betriebsdruck (P2) kleiner als oder gleich dem ersten Betriebsdruck (P1) ist; und
Verringern der Zufuhr von Spülgas, wenn der erste Betriebsdruck (P1) größer als der zweite Betriebsdruck (P2) ist.

## Revendications

1. Procédé de commande d'une alimentation en gaz de purge pour réduire une fuite d'un joint dynamique (10) pour étancher une chambre à vide (4), le joint dynamique (10) comprenant au moins un premier élément d'étanchéité (12-1) présentant des premier et deuxième côtés (12-1A, 12-1B) opposés, le procédé comprenant :
la détermination d'une première pression de fonctionnement sur le premier côté du premier élément d'étanchéité (12-1) ;
la détermination d'une deuxième pression de fonctionnement sur le deuxième côté du premier élément d'étanchéité (12-1) ;
la détermination d'un écart de pression (ΔP) entre la première pression de fonctionnement (P1) sur le premier côté du premier élément d'étanchéité (12-1) et la deuxième pression de fonctionnement (P2) sur le deuxième côté du premier élément d'étanchéité (12-1) ;
la commande de l'alimentation en gaz de purge sur le deuxième côté du premier élément d'étanchéité (12-1) en fonction de l'écart de pression (ΔP) déterminé ;
la détermination d'un taux de variation (dP1/dt) de la première pression de fonctionnement (P1) ; et
l'identification quand le taux de variation (dP1/dt) déterminé est inférieur à un seuil de taux de variation prédéfini ;
dans lequel le procédé comprend la réduction ou l'arrêt de l'alimentation en gaz de purge lorsque le taux de variation (dP1/dt) déterminé de la première pression de fonctionnement (P1) est inférieur au seuil de taux de variation prédéfini.

2. Procédé selon la revendication 1, dans lequel la commande de l'alimentation en gaz de purge comprend :
l'augmentation de l'alimentation en gaz de purge lorsque l'écart de pression (ΔP) déterminé est tel que la deuxième pression de fonctionnement (P2) soit inférieure ou égale à la première pression de fonctionnement (P1).

3. Procédé selon la revendication 1 ou 2, dans lequel la commande de l'alimentation en gaz de purge comprend au moins l'une parmi ce qui suit :
l'augmentation de l'alimentation en gaz de purge lorsque l'écart de pression (ΔP) déterminé est inférieur ou égal à un premier seuil d'écart de pression (ΔP) prédéfini ; et
la réduction de l'alimentation en gaz de purge lorsque la différence entre la première pression de fonctionnement (P1) et la deuxième pression de fonctionnement (P2) est supérieure à un deuxième seuil d'écart de pression (ΔP) prédéfini.

4. Procédé selon la revendication 1, 2 ou 3, dans lequel la détermination de l'écart de pression (ΔP) comprend la soustraction de la première pression de fonctionnement (P1) à la deuxième pression de fonctionnement (P2).

5. Procédé selon l'une quelconque des revendications 1 à 4, comprenant la commande de l'alimentation en gaz de purge en fonction de l'écart de pression (ΔP) déterminé lorsque la deuxième pression de fonctionnement (P2) est inférieure ou égale à un seuil de pression de fonctionnement prédéfini.

6. Procédé selon l'une quelconque des revendications précédentes, dans lequel la commande de l'alimentation en gaz de purge comprend l'ouverture d'une vanne d'alimentation en gaz de purge (21) pour augmenter l'alimentation en gaz de purge, et la fermeture de la vanne d'alimentation en gaz de purge (21) pour réduire l'alimentation en gaz de purge.

7. Dispositif de commande (23) pour commander une alimentation en gaz de purge pour réduire une fuite d'un joint dynamique (10) pour étancher une chambre à vide (4), le joint dynamique (10) comprenant au moins un premier élément d'étanchéité (12-1) présentant des premier et deuxième côtés (12-1A, 12-1B) opposés, le dispositif de commande (23) comprenant un processeur et un support non transitoire lisible par ordinateur sur lequel est stocké un jeu d'instructions qui, lorsqu'il est exécuté, amène le processeur à :
recevoir un premier signal de pression de fonctionnement depuis un premier capteur de pression de fonctionnement disposé sur le premier côté du premier élément d'étanchéité, le premier signal de pression de fonctionnement indiquant une première pression de fonctionnement ;
recevoir un deuxième signal de pression de fonctionnement depuis un deuxième capteur de pression de fonctionnement disposé sur le deuxième côté du premier élément d'étanchéité, le deuxième signal de pression de fonctionnement indiquant une deuxième pression de fonctionnement ;
déterminer un écart de pression (ΔP) entre la première pression de fonctionnement (P1) sur le premier côté du premier élément d'étanchéité (12-1) et la deuxième pression de fonctionnement (P2) sur le deuxième côté du premier élément d'étanchéité (12-1) ;
délivrer un signal de vanne de commande pour commander à une vanne de commande (21) de commander l'alimentation en gaz de purge sur le deuxième côté du premier élément d'étanchéité (12-1) en fonction de l'écart de pression (ΔP) déterminé ;
**caractérisé en ce que** le dispositif de commande est en outre configuré pour :
déterminer un taux de variation (dP1/dt) de la première pression de fonctionnement (P1) ; et
identifier quand le taux de variation (dP1/dt) déterminé est inférieur à un seuil de taux de de variation prédéfini ;
dans lequel le dispositif de commande (23) est configuré pour délivrer un signal de vanne de commande pour commander à la vanne de commande (21) de réduire ou d'interdire l'alimentation en gaz de purge lorsque le taux de variation (dP1/dt) déterminé de la première pression de fonctionnement (P1) est inférieur au seuil de taux de variation prédéfini.

8. Dispositif de commande (23) selon la revendication 7, dans lequel le dispositif de commande (23) est configuré pour
augmenter l'alimentation en gaz de purge lorsque l'écart de pression (ΔP) déterminé indique que la deuxième pression de fonctionnement (P2) est inférieure ou égale à la première pression de fonctionnement (P1).

9. Dispositif de commande (23) selon la revendication 7 ou 8, dans lequel le dispositif de commande (23) est configuré pour réaliser au moins l'un parmi ce qui suit :
augmenter l'alimentation en gaz de purge lorsque l'écart de pression (ΔP) déterminé est inférieur ou égal à un premier seuil d'écart de pression (ΔP) prédéfini ; et
réduire l'alimentation en gaz de purge lorsque la différence entre la première pression de fonctionnement (P1) et la deuxième pression de fonctionnement (P2) est supérieure à un deuxième seuil d'écart de pression (ΔP) prédéfini.

10. Dispositif de commande (23) selon la revendication 7, 8 ou 9, dans lequel le dispositif de commande (23) est configuré pour déterminer l'écart de pression (ΔP) par la soustraction de la première pression de fonctionnement (P1) à la deuxième pression de fonctionnement (P2).

11. Dispositif de commande (23) selon l'une quelconque des revendications 7 à 10, dans lequel le dispositif de commande (23) est configuré pour commander l'alimentation en gaz de purge en fonction de l'écart de pression (ΔP) déterminé lorsque la deuxième pression de fonctionnement (P2) est inférieure ou égale à un seuil de pression de fonctionnement prédéfini.

12. Dispositif de commande (23) selon l'une quelconque des revendications 7 à 11, dans lequel le dispositif de commande (23) est configuré pour ouvrir une vanne d'alimentation en gaz de purge (21) pour augmenter l'alimentation en gaz de purge, et fermer la vanne d'alimentation en gaz de purge (21) pour réduire ou arrêter l'alimentation en gaz de purge.

13. Système de vide (2) comprenant un dispositif de commande (23) selon l'une quelconque des revendications 7 à 12.

14. Système d'étanchéité dynamique (1) pour un système de vide (2), le système d'étanchéité dynamique (1) comprenant :
au moins un premier élément d'étanchéité (12-1) pour étancher une chambre à vide (4), le premier élément d'étanchéité (12-1) présentant des premier et deuxième côtés (12-1A, 12-1A) opposés ;
un système d'alimentation en gaz de purge pour alimenter le deuxième côté du premier élément d'étanchéité (12-1) en gaz de purge ; et
un dispositif de commande (23) selon l'une quelconque des revendications 7 à 13 pour commander le système d'alimentation en gaz de purge, le dispositif de commande (23) étant configuré pour commander au système d'alimentation en gaz de purge de commander l'alimentation du deuxième côté du premier élément d'étanchéité (12-1) en gaz de purge en fonction de l'écart de pression (ΔP) déterminé ; et délivrer un signal de vanne de commande pour commander à une vanne de commande de réduire ou d'arrêter l'alimentation en gaz de purge lorsque le taux de variation (dP1/dt) déterminé de la première pression de fonctionnement (P1) est inférieur au seuil de taux de variation prédéfini.

15. Système d'étanchéité dynamique (1) selon la revendication 14, dans lequel le dispositif de commande (23) est configuré pour réaliser au moins l'un parmi ce qui suit :
augmenter l'alimentation en gaz de purge lorsque la deuxième pression de fonctionnement (P2) est inférieure ou égale à la première pression de fonctionnement (P1) ; et
réduire l'alimentation en gaz de purge lorsque la première pression de fonctionnement (P1) est supérieure à la deuxième pression de fonctionnement (P2).
